Europäisches Patentamt

European Patent Office

Office européen des brevets

(19)

(11) Numéro de publication : **0 031 780**
**B1**

(12)

# FASCICULE DE BREVET EUROPÉEN

(45) Date de publication du fascicule du brevet :
**09.01.85**

(51) Int. Cl.⁴ : **H 02 P   7/62**

(21) Numéro de dépôt : **80401868.7**

(22) Date de dépôt : **24.12.80**

(54) **Dispositif de récupération d'énergie pour onduleur.**

(30) Priorité : **27.12.79 FR 7931734**

(43) Date de publication de la demande :
**08.07.81 Bulletin 81/27**

(45) Mention de la délivrance du brevet :
**09.01.85 Bulletin 85/02**

(84) Etats contractants désignés :
**BE DE GB IT NL**

(56) Documents cités :
**FR-A- 1 552 477**
**FR-A- 2 214 996**
**FR-A- 2 315 193**
**US-A- 3 453 524**
**US-A- 3 460 021**

(73) Titulaire : **JEUMONT-SCHNEIDER Société anonyme dite:**
**31-32, Quai de Dion Bouton**
**F-92811 Puteaux Cedex (FR)**

(72) Inventeur : **Naçabal, Michel**
**7, rue des Tilleuls**
**F-77210 Avon (FR)**

(74) Mandataire : **Lejet, Christian**
**Société JEUMONT-SCHNEIDER 31-32, Quai de Dion Bouton**
**F-92811 Puteaux Cedex (FR)**

EP 0 031 780 B1

Jouve, 18, rue St-Denis, 75001 Paris, France

## Description

La présente invention concerne les onduleurs, qui, connectés entre les bornes d'une source de courant continu, permettent d'engendrer un courant alternatif à fréquence variable et sont destinés notamment à la commande de la vitesse de rotation d'une machine électrique tournante du type asynchrone et, plus précisément, un dispositif de récupération d'énergie pour un tel onduleur. Divers onduleurs à récupération d'énergie ont été décrits par exemple dans les brevets français 1 552 477 et 2 315 193, mais ils présentent l'inconvénient d'être de réalisation complexe et coûteuse par rapport à l'économie apportée.

La présente invention a pour objet un dispositif de récupération de l'énergie emmagasinée par les inductances de fuite d'une machine électrique tournante à courant alternatif, connectée aux bornes de sortie d'un onduleur à transistors engendrant un courant alternatif de fréquence variable et branché à une source de courant continu, dont le prix est faible par rapport à l'économie réalisée.

De façon connue, l'onduleur inclut une logique commandant la commutation des transistors et un condensateur connecté entre les lignes à courant continu de l'onduleur et recevant l'énergie emmagasinée par les inductances de fuite de la machine à chaque commutation par l'intermédiaire d'un pont de diodes.

Lorsqu'aucun dispositif de récupération de cette énergie n'est prévu, une branche comprenant une résistance de dissipation de cette énergie en série avec un thyristor dont l'amorçage est commandé par la logique commandant déjà la commutation des autres composants commutables, est disposée en parallèle avec le condensateur. Selon la présente invention, le dispositif de récupération d'énergie est caractérisé en ce qu'il comprend un transformateur dont l'enroulement primaire, en série avec au moins un transistor de commutation commandé par la logique, est connecté entre les bornes du condensateur et dont l'enroulement secondaire est disposé en série entre l'une des bornes de la source de courant continu et l'entrée correspondante de l'onduleur.

Ce dispositif peut être complété de plusieurs autres branches permettant d'en améliorer le fonctionnement et d'éviter la création de toute surtension entre les bornes du transistor utilisé.

L'invention sera mieux comprise et d'autres buts, avantages et caractéristiques de celle-ci apparaîtront plus clairement à la lecture de la description qui suit à laquelle deux planches de dessins sont annexées.

La figure 1 représente le schéma électrique d'un ensemble constitué par l'onduleur et le dispositif de récupération d'énergie conformément à un premier mode de réalisation de la présente invention.

La figure 2 représente le schéma électrique du même ensemble conformément à un deuxième mode de réalisation de l'invention, et

la figure 3 représente le schéma de la figure 1 auquel certaines branches ont été ajoutées au dispositif de récupération pour en améliorer le fonctionnement.

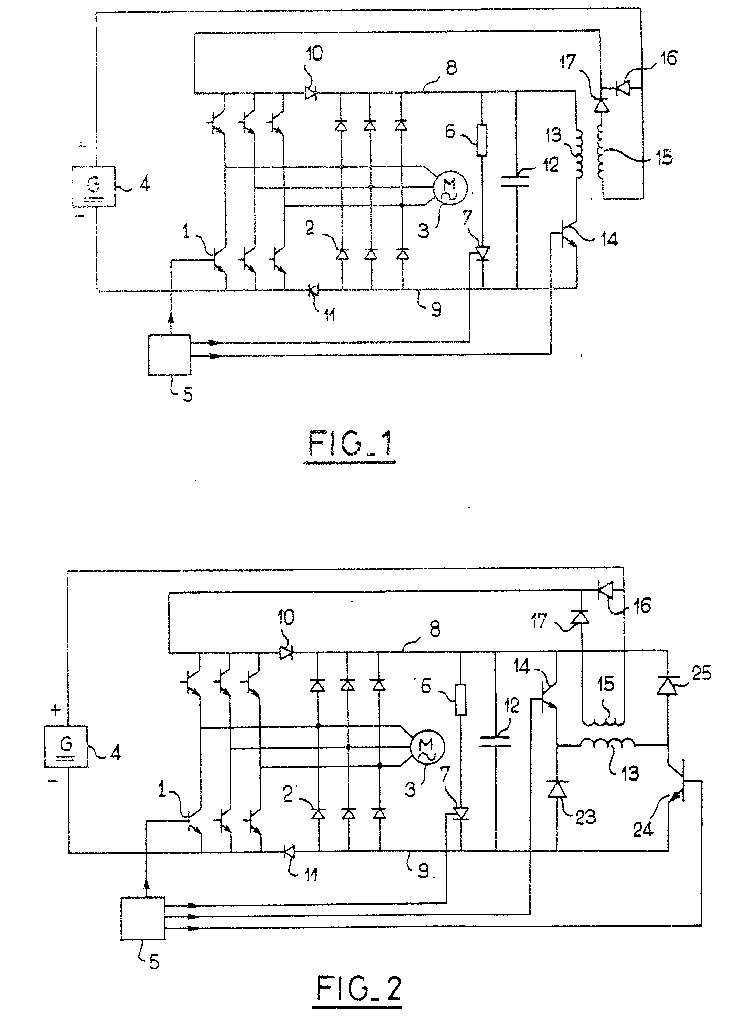

En référence maintenant à la figure 1 qui représente à titre indicatif un premier mode de réalisation de l'invention, l'onduleur comporte six transistors 1 entre lesquels la machine 3 est connectée de manière connue. L'onduleur est relié aux bornes de sortie d'un générateur 4 de courant continu qui est généralement constitué par un redresseur commandé disposé en série avec une inductance, aux bornes d'une source de tension alternative. Une logique 5 commande la commutation des transistors 1 de l'onduleur.

Une branche comprenant une résistance 6 en série avec un thyristor 7 est prévue pour éviter toute surtension entre les lignes 8 et 9 à courant continu. En outre deux diodes 10 et 11 sont disposées en série dans les lignes 8 et 9 de manière connue entre le pont de transistors 1 et le pont de diodes 2 destiné à diriger l'énergie emmagasinée par les inductances de fuite de la machine 3 lors des commutations des transistors 1 vers le condensateur 12 qui est connecté entre les lignes 8 et 9.

Selon l'invention, le dispositif de récupération de cette énergie inclut essentiellement un transformateur dont l'enroulement primaire 13 est disposé en série avec au moins un transistor de commutation 14 et dont l'enroulement secondaire 15 est disposé entre l'une des bornes de la source de courant continu et l'entrée correspondante de l'onduleur.

L'énergie emmagasinée dans le condensateur 12 dès l'apparition d'une tension à ses bornes est ainsi transférée à un générateur de courant placé en série avec la source de courant 4. Deux diodes 16 et 17 isolent l'enroulement 15 de la source de courant 4, lorsque le transistor 14 est bloqué et qu'il n'y a pas récupération d'énergie.

Le schéma représenté figure 2 met en œuvre deux transistors de commutation 14 et 24. L'enroulement primaire 13 du transformateur est disposé entre les points communs, d'une part, du transistor 14 et de la diode 23 reliés en série dans une branche connectée entre les bornes du condensateur 12 et, d'autre part, du transistor 24 et de la diode 25 reliée en série dans une deuxième branche identiquement connectée. Dans ce cas, l'énergie est récupérée lorsque les deux transistors 14 et 24 sont conducteurs et, à l'inverse, le transformateur est désaturé au moyen des deux diodes 23 et 25 lorsque ces deux mêmes transistors sont bloqués.

Ce schéma présente l'avantage par rapport au dispositif représenté figure 1 de mettre en œuvre des transistors dont les performances sont réduites, donc des transistors moins coûteux. En effet, ils supportent une tension égale à la valeur de la tension de crête du condensateur 12 au lieu d'une tension double de cette dernière.

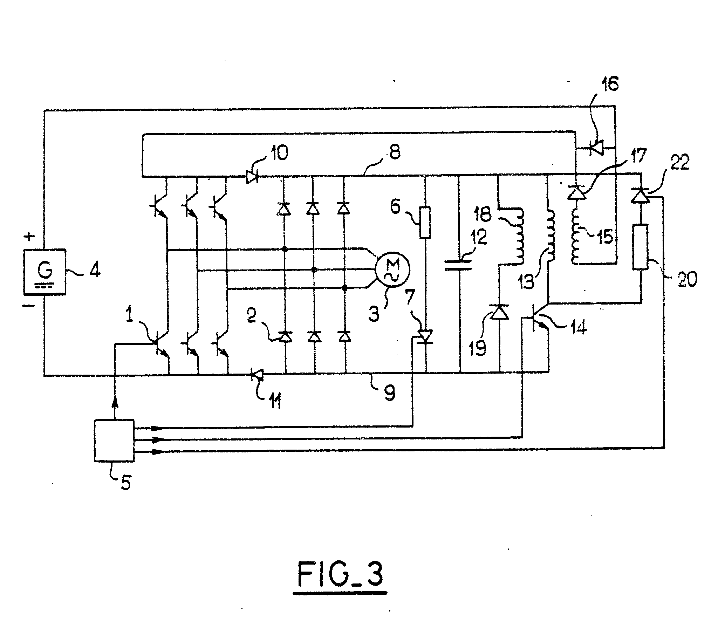

En considération maintenant de la figure 3 sur laquelle les composants communs au schéma de la figure 1 portent les mêmes références, on constate que deux branches ont été ajoutées au dispositif de récupération d'énergie.

La première de ces branches comprend un second enroulement secondaire 18 du même transformateur, en série avec une diode 19, la branche étant connectée en parallèles avec le condensateur 12. Cette branche a pour fonction de désaturer le transformateur lorsque le transistor 14 est bloqué. Elle permet ainsi d'évacuer automatiquement et rapidement le courant magnétisant.

La seconde de ces branches comprend une résistance 20 en série avec un thyristor 22 commandé par la logique 5. Cette seconde branche est connectée en parallèle avec l'enroulement primaire 13 du transformateur. Elle a pour but, essentiellement, de faire décroître très rapidement la tension aux bornes du transistor 14 lorsque ce dernier est bloqué, de manière à obtenir un facteur de durée excellent et à dissiper l'énergie emmagasinée dans l'enroulement primaire 13 dans la résistance 20.

Selon une forme de réalisation, la tension continue était environ de 700 V et la fréquence de fonctionnement du dispositif s'élevait à 2 kHZ pour une machine de 30 kW. Le dispositif a apporté dans ces conditions une économie de 10 % environ de l'énergie consommée.

Bien que seul un mode de réalisation de l'invention ait été décrit, il est évident que toute modification apportée par l'Homme de l'Art dans l'esprit de l'invention ne sortirait pas du cadre de la présente invention. Par exemple l'enroulement secondaire 15 peut être disposé en série entre l'autre borne de la source de courant continu 4 et l'entrée correspondante de l'onduleur. Enfin le moteur connecté aux bornes de l'onduleur peut être aussi bien du type asynchrone que du type synchrone sous-excité.

**Revendications**

1. Dispositif de récupération de l'énergie emmagasinée par les inductances de fuite d'une machine électrique (3) tournante à courant alternatif, connectée aux bornes de sortie d'un onduleur à transistors (1) engendrant un courant alternatif de fréquence variable et branché à une source (4) de courant continu, ledit onduleur incluant une logique (5) commandant la commutation des transistors et un condensateur (12) connecté entre les lignes à courant continu dudit onduleur et recevant ladite énergie emmagasinée par les inductances de fuite de ladite machine à chaque commutation par l'intermédiaire d'un pont de diodes (2), ledit dispositif étant caractérisé en ce qu'il comprend un transformateur dont l'enroulement primaire (13), en série avec au moins un transistor de commutation (14) commandé par ladite logique (5) est connecté entre les bornes dudit condensateur (12), et dont l'enroulement secondaire (15) est disposé en série entre l'une des bornes de ladite source de courant continu (4) et l'entrée correspondante dudit onduleur.

2. Dispositif selon la revendication 1, caractérisé en ce qu'une première diode (17) est disposée en série avec ledit enroulement secondaire (15), une seconde diode (16) étant disposée en parallèle avec la branche incluant le dit enroulement secondaire (15) et ladite première diode (17) de manière à interdire toute circulation du courant contraire à la polarité de ladite source (4).

3. Dispositif selon la revendication 1, caractérisé en ce qu'il inclut en outre une branche comprenant un second enroulement secondaire (18) dudit transformateur en série avec une troisième diode (19), ladite branche étant connectée entre les bornes dudit condensateur (12), de manière à désaturer ledit transformateur lorsque ledit transistor (14) est bloqué.

4. Dispositif selon la revendication 1 caractérisé en ce qu'il inclut en outre une branche comprenant une résistance (20) en série avec un thyristor (22) commandé par la dite logique (5), la dite branche étant connectée entre les extrémités du dit enroulement primaire (13).

5. Dispositif selon la revendication 1 caractérisé en ce que le dit enroulement primaire (13) est disposé entre les points communs d'une part d'un premier transistor de commutation (14) et d'une diode (23) reliés en série dans une branche connectée aux bornes du dit condensateur (12) et, d'autre part, d'un deuxième transistor de commutation (24) et d'une diode (25) reliés en série dans une autre branche identiquement connectée.

**Claims**

1. Device for recovering the energy stored by the leakage inductances of an a. c. electrical machine (3) of rotary type connected to the output terminals of an inverter comprising transistors (1) which produces an alternating current of variable frequency and which is connected to a source (4) of direct current, the said inverter including a logic element (5) controlling the switching of the transistors and a capacitor (12) connected between the direct-current lines of the said inverter and receiving the said energy stored by the leakage inductances of the said machine at each switching by means of a bridge of diodes (2), the said device being characterised in that it comprises a transformer whose primary winding (13), in series with at least one switching transistor (14) controlled by the said logic element (5) is connected between the terminals of the said capacitor (12), and whose secondary winding (15) is arranged in series between one of the terminals of the said direct current source (4) and the corresponding input of the said inverter.

2. Device according to claim 1, characterised in that a first diode (17) is arranged in series with the said secondary winding (15), a second diode (16) being arranged in parallel with the branch including the said secondary winding (15) and the said first diode (17) in such a manner as to prevent any flow of current oppositely to the polarity of the said source (4).

3. Device according to claim 1, characterised in that it also includes a branch comprising a second secondary winding (18) of the said transformer in series with a third diode (19), the said branch being connected between the terminals of the said capacitor (12), so as to desaturate the said transformer when the said transistor (14) is blocked.

4. Device according to claim 1, characterised in that it also includes a branch comprising a resistor (20) in series with a thyristor (22) controlled by the said logic element (5), the said branch being connected between the ends of the said primary winding (13).

5. Device according to claim 1, characterised in that the said primary winding (13) is arranged between the common points on the one hand of a first switching transistor (14) and a diode (23) which are connected in series in a branch connected to the terminals of the said capacitor (12) and, on the other hand, of a second switching transistor (24) and a diode (25) which are connected in series in another branch identically connected.

**Ansprüche**

1. Vorrichtung zur Rückgewinnung der durch die Streuinduktivitäten einer rotierenden elektrischen Wechselstrommaschine (3) gespeicherten Energie, wobei die Maschine an die Ausgangsanschlüsse eines Transistor-Wechselrichters (1) angeschlossen ist, der einen Wechselstrom variabler Frequenz erzeugt und an eine Gleichstromquelle (4) angeschlossen ist, wobei der Wechselrichter eine die Schaltung der Transistoren steuernde Logik (5) und einen Kondensator (12) enthält, der zwischen die Gleichstromleitungen des Wechselrichters geschaltet ist und die genannte durch die Streuinduktivitäten der Maschine gespeicherte Energie bei jeder Umschaltung über eine Diodenbrücke (2) empfängt, und wobei die Vorrichtung dadurch gekennzeichnet ist, daß sie einen Transformator enthält, dessen Primärwicklung (13) in Reihe mit wenigstens einem durch die genannte Logik (5) gesteuerten Schalttransistor (14) zwischen die Anschlüsse des Kondensators (12) geschaltet ist und dessen Sekundärwicklung (15) in Reihe zwischen einen der Anschlüsse der Gleichstromquelle (4) und den entsprechenden Eingang des Welchselrichters geschaltet ist.

2. Vorrichtung nach Anspruch 1, dadurch gekennzeichnet, daß eine erste Diode (17) in Reihe mit der genannten Sekundärwicklung (15) angeordnet ist, während eine zweite Diode (16) parallel zu dem Zweig geschaltet ist, welcher die genannte Sekundärwicklung und die erste Diode (17) enthält, so daß jeder Stromfluß entgegen der Polarität der genannten Quelle (4) verhindert ist.

3. Vorrichtung nach Anspruch 1, dadurch gekennzeichnet, daß sie ferner einen Zweig enthält, der eine zweite Sekundärwicklung (18) des Transformators in Reihe mit einer dritten Diode (19) umfaßt, wobei dieser Zweig zwischen die Anschlüsse des Kondensators (12) geschaltet ist, so daß der Transformator entsättigt wird, wenn der Transistor (14) gesperrt ist.

4. Vorrichtung nach Anspruch 1, dadurch gekennzeichnet, daß sie ferner einen Zweig umfaßt, der einen Widerstand (20) in Reihe mit einem durch die gennante Logik (5) gesteuerten Thyristor (22) enthält, wobei der genannte Zweig zwischen die Enden der genannten Primärwicklung (13) geschaltet ist.

5. Vorrichtung nach Anspruch 1, dadurch gekennzeichnet, daß die genannte Primärwicklung (13) zwischen dem Verbindungspunkt eines ersten Schalttransistors (14) mit einer Diode (23), welche in einem an die Anschlüsse des Kondensators (12) angeschlossenen Zweig in Reihe geschaltet sind, und dem Verbindungspunkt eines zweiten Schalttransistors (24) mit einer Diode (25) angeordnet ist, welche in Reihe in einem weiteren völlig gleich angeschlossenen Zweig liegen.

FIG_1

FIG_2

FIG_3